# EUROPEAN PATENT SPECIFICATION

(11) **EP 3 343 711 B1**
(45) Date of publication and mention of the grant of the patent: **10.04.2019**
(21) Application number: 17202820.1
(22) Date of filing: 21.11.2017
(51) Int. Cl.: H02B 13/00

(54) **ELECTRICAL COUPLING UNIT FOR COUPLING OF ELECTRICAL SWITCHGEARS**
ELEKTRISCHE KUPPLUNG FÜR SCHALTANLAGEN
COUPLAGE ÉLECTRIQUE POUR CELLULES DE COMMUTATION

(30) Priority: 27.12.2016 BE 201605984
(43) Date of publication of application: 04.07.2018
(73) Proprietor: Het Veer, 9000 Gent (BE)
(72) Inventor: VANDOORNE, Rik, 9000 Gent (BE)
(74) Representative: Gevers Patents

(56) References cited:
- EP-A1- 1 339 145
- EP-A1- 1 577 994
- DE-C1- 10 119 183

## Description

### Field of the invention

According to a first aspect, the present invention relates to an electrical coupling unit, said electrical coupling unit being for interconnecting two electrical switchgears. According to a second aspect, the present invention relates to a process for producing an electrical coupling unit.

### Background of the invention

Power stations generate high-voltage power (typically up to 380.000 V). The high-voltage power is dispatched to transformer stations where it is transformed into medium-voltage power (typically between 3.000 and 36.000 V). The medium-voltage power is then geographically distributed. When the medium-voltage power enters residential areas or industrial facilities, it is handled in a medium-voltage electrical system that transforms it into low-voltage power (typically less than 1000 V). The medium-voltage electrical system may have security and measurement functions. The medium-voltage electrical system comprises one or several electrical switchgears, which may be identical. The electrical switchgears typically contain a recipient with insulating gas, for example SF₆, dry air, nitrogen or another gas or combination of gasses.

When a need occurs to extend a medium-voltage electrical system with an additional electrical switchgear, this additional electrical switchgear has to be electrically connected through its external connecting device to an identical external connecting device of an already-installed electrical switchgear. Each external connecting device typically comprises one or three electrical bushings into a plate of the electrical switchgear.

It happens that the floor of the room wherein the electrical switchgears are installed is not horizontal. The electrical coupling units between two electrical switchgears have therefore to compensate for this difference of level.

Document EP1339145B1 discloses an electrical coupling unit for connecting the switchgear plugs of two external connecting devices able to accommodate a moderate difference of levels between the switchgear plugs. This known electrical coupling unit comprises a sleeve and a connector. The connector comprises a conductive ring and conductive parts mounted in radial passages of the conductive ring. The conductive ring is snugly fitted on the inside of the sleeve. The conductive ring comprises radial passages, each of which housing one of the conductive parts. The conductive parts are provided with a central recess that determines a loose-fitting housing for each conductive part in the corresponding passage of the conductive ring.

The mounting of the central recesses of the conductive parts in the passages of the conductive ring is such that the conductive parts can swivel with respect to the conductive ring in order to accommodate for differences of levels between electrical switchgear plugs.

This known electrical coupling unit has several problems. First, the central recesses of the conductive parts create a bottleneck for the conduction between the two switchgear plugs and thus a location of high resistance. This high resistance creates a potential voltage drop and increases the temperature inside the electrical coupling unit by Joule heating.

Second, the connector being made of parts loosely assembled together, it might be difficult to fit it snuggly into the sleeve, as required according to the assembly of this known electrical coupling unit.

### Summary of the invention

According to a first aspect, an object of the invention is to provide an electrical coupling unit for two electrical switchgears of low resistance, able to accommodate for a difference of level between the two electrical switchgears and easy to assemble.

According to this first aspect, the invention provides an electrical coupling unit for interconnecting a first electrical switchgear having a first switchgear plug and a second electrical switchgear having a second switchgear plug and comprising:
- a connector comprising:
   ∘ a first connector plug for engaging with the first switchgear plug;
   ∘ a second connector plug for engaging with the second switchgear plug;
   ∘ a connector ring located between said first and second connector plugs;
- a tubular first stiffening means surrounding at least part of the first connector plug,
- a tubular second stiffening means surrounding at least part of the second connector plug,
- a flexible insulating sleeve having a through sleeve hole surrounding the first stiffening means, the connector and the second stiffening means,
characterized in that
- the first connector plug, the second connector plug and the connector ring are parts of a single piece of electrically conductive material;
- the dimensions of the first connector plug and the first stiffening means are such that a first gap exists between the first connector plug and the first stiffening means, and
- the dimensions of the second connector plug and the second stiffening means are such that a second gap exists between the second connector plug and the second stiffening means.

In the invention, the connector is made of a single piece of electrically conductive material. The connector plugs and the connector ring are produced together as a unique element. The connector plugs and the connector ring are therefore permanently secured together. The single-piece connector may also be called "monopiece connector" or "one-piece connector".

Since the connector plugs and the connector ring are comprised in a single piece of material, there is no need of a recess that would create a zone of high resistance inside the connector. Moreover, since the connector plugs are made of electrically conductive material, their resistivity is low.

The connector plugs have some freedom of motion to swivel or tilt within the gaps that are present between the connector plugs and the stiffening means. If the first connector plug goes up, the second connector plug goes down for example. The connector ring being made in one piece with the connector plugs, it follows the motion of the connector plugs, for example by slightly compressing the interior surface of the flexible sleeve. The connector can makes thus an angle with the stiffening means to accommodate for a difference of level between the two electrical switchgears. In an embodiment of the invention, the angle that appears between the connector and each of the stiffening means can be for example up to 5°. The sleeve may also bend to accommodate for a difference of level between the two electrical switchgears, especially in the part of the sleeve surrounding the connector ring.

The connector plugs are preferably female plugs in which the switchgear plugs can be inserted. In that case, the switchgear plugs are male plugs and each connector female plug receives a switchgear male plug.

It is also possible that the connector plugs are male plugs that can be inserted into the switchgear plugs. In that case, the switchgear plugs are female plugs and each connector male plug is received in a switchgear female plug.

The first and the second stiffening means are preferably identical. The second connector plug is opposite to the first connector plug. The connector ring is preferably a hollow cylinder. The connector ring preferably joins directly the first and the second connector plugs.

The sleeve hole has preferably a circular section. The sleeve preferably has the shape of two identical truncated cones, joined on their wide diameter by a central portion of lower diameter than the wide diameter of the truncated cones. In other words, the wall of the sleeve is thinner in its central portion. This central portion of the sleeve preferably surrounds the connector ring. The thin wall of this central portion makes easier a bending of the sleeve there and decreases the mechanical resistance of the sleeve wall to adapt its shape to the tilting of the connector ring inside it.

The sleeve preferably comprises an elastomer, more preferably comprises silicone or ethylene propylene diene monomer (EPDM) rubber. The sleeve is preferably made of an elastomer, more preferably is made of silicone or ethylene propylene diene monomer (EPDM) rubber.

The sleeve comprises a flexible material. The sleeve is thus able to withstand deformation, for example during the connection of the electrical switchgears. This ability to withstand deformation is useful for adapting to the difference of levels between the electrical bushings of the external connecting devices, for adapting to the shape of the electrical bushing and for providing good mechanical insulation when pressed. The material of the sleeve has preferably a Young's modulus between 1 and 1000 MPa, more preferably between 10 and 100 MPa.

The connector is preferably metallic. The connector comprises preferably copper. The connector is preferably made of copper or of a copper alloy.

Preferably, the connector ring is not in the stiffening means in order to be able to bend with respect to them. For example, an external dimension of the connector ring, like its external diameter, can be higher than the internal diameter of the stiffening means in such a way that the connector ring cannot slip inside the stiffening means.

The external diameter of the connector ring may be equal to the internal diameter of the sleeve hole to be snuggly fitted inside the sleeve hole. The external diameter of the connector ring may be less than the internal diameter of the sleeve hole to be able to bend further inside the sleeve hole. In this last case, the connector ring can be held inside the sleeve by the stiffening means.

The external diameter of the connector ring is preferably higher than the external diameters of the connector plugs.

The radial extension of the first and the second gaps is preferably between 5.0 and 10.0 % of the internal diameter of the stiffening means, more preferably between 8.0 and 9.0% of the internal diameter of the stiffening means. The inventors have found that this range for the first and second gaps makes possible a match with the dimensions of most electrical bushings and provides enough freedom of tilting for the connector to accommodate most of the differences of levels actually encountered on the field.

The electrical coupling unit can a temporary electrical coupling between two electrical switchgears since it is easily removable from the electrical switchgears. The electrical coupling unit can also provide a permanent electrical coupling between two electrical switchgears.

A third electrical switchgear can be electrically connected to the first or the second electrical switchgear by a second electrical coupling unit according to the invention. It is therefore possible to electrically couple many electrical switchgears by electrical coupling units according to the invention.

In an embodiment of the invention, the electrical coupling unit is such that:
- the first connector plug has a first end for engaging with the first switchgear plug and comprises tongues separated by slits that are opened at said first end; and
- the second connector plug has a first end for engaging with the second switchgear plug and comprises tongues separated by slits that are opened at said first end.

The presence of the slits makes easier for the connector plugs to engage with the switchgear plugs since the tongues can slightly move away from each other.

Preferably, the tongues form a hollow cylinder and each tongue extends more circularly than radially.

The tongues are preferably arcuate. The slits are radial openings through the hollow cylinder formed by the tongues. The higher circular than radial extension of the tongues provides a high conductance to the connector and reduces the diameter of the connector plugs, which makes possible a high radial extension of the first and second gaps. It makes also the tongues slightly flexible in the radial direction, in order to accommodate the switchgear plugs under some angle.

In an embodiment of the invention, at least some tongues have an internal protrusion at the first end of the connector plug.

The internal protrusion improves the connection between the switchgear plugs and the connector plugs, especially when there is an angle between the connector plugs and the switchgear plugs because of the difference of levels between the switchgear plugs.

More preferably, all tongues have an internal protrusion at the first end of the connector plug.

In an embodiment of the invention, the internal protrusions of the tongues have a semi-circular cross-section.

This semi-circular shape improves the electrical contact between the switchgear plug and the connector, especially when the switchgear plugs are not aligned with each other and form therefore an angle with the connector. The radius of these semi-circular protrusions can for example be around 2.5 mm.

In an embodiment of the invention, the internal protrusions of the tongues form an annular protrusion.

This annular protrusion reduces the internal diameter of the connector plugs at their first end.

Advantageously, each connector plug has a second end connected to the connector ring and comprises a non-split ring at said second end.

In other words, the slits between the tongues preferably do not extend up to the connector ring: a full non-split ring, in the direct prolongation of the tongues, makes the connection between the tongues and the connector ring.

In an embodiment of the invention, each connector plug comprises a recess for receiving a clamping means.

The recess can receive a clamping means that helps to maintain the tongues close to each other, even when a switchgear plug is inserted in the connector plug. The recess is preferably closer to the first end of the connector plug than to the second end of said connector plug.

The electrical coupling unit comprises, in an embodiment of the invention, a first clamping ring placed around the first connector plug and inside the first stiffening means, and a second clamping ring placed around the second connector plug and inside the second stiffening means.

The clamping rings prevent that the tongues moves away from each other once the switchgear plugs are inserted in the middle of them to obtain a minimal electrical contact pressure.

Preferably, the first and the second clamping rings are springs.

Using springs for the clamping rings gives some flexibility, especially for shearing, and avoids spreading of the tongues. The clamping rings are more preferably metallic springs, even more preferably made of nonmagnetic stainless steel.

Preferably, the first and the second stiffening means are springs, preferably metallic springs. More preferably, the first and the second stiffening means are made of nonmagnetic stainless steel.

Springs are advantageous because they resist well to compression perpendicular to their axis and their loops can move with respect to each other in a direction perpendicular to the spring axis. Therefore, the springs prevent deformation substantially modifying the section of the sleeve hole, like compression in one radial direction and stretching in the perpendicular radial direction, but shearing or flexion of the portions of the sleeve wherein the stiffening means are received is still possible. It thus provides a high flexibility to the electrical coupling unit to adapt to difference of levels between the switchgear plugs, i.e., it provides a high tolerance between the first and the second switchgear plugs, but also a high resistance to squashing. In other words, the springs provide a radial stiffening and give to the electrical coupling unit some flexibility in a direction perpendicular to the symmetry axis of the sleeve.

Using springs as stiffening means makes possible, because of a small displacement of the loops of the springs, for the stiffening means to adapt their shape to the tilting of the connector ring.

Preferably, the electrical coupling unit comprises a grounding ring surrounding the sleeve.

This grounding ring makes possible to ground the external surface of the sleeve to discharge a floating electric field.

More preferably, the grounding ring is a spring with a spring axis forming a circle around the sleeve. Using such a spring as grounding ring provides an especially good electrical contact.

Even more preferably, the grounding ring is made of magnetic or nonmagnetic stainless steel.

In an embodiment, the invention also provides an interconnection kit of parts comprising:
- an electrical coupling unit according to the invention, and
- a cap for closing an electrical bushing of an external connecting device of an electrical switchgear and comprising:
   - a flexible insulating part configured to be at least partially received in said electrical bushing and comprising a non-through hole, and
   - a conductive cap stiffening means located inside the non-through hole and comprising a tubular part for engaging with a switchgear plug of the electrical bushing.

Preferably, the tubular part comprises a spring. More preferably, the tubular part is a spring.

Bending of the cap might be required if the mounting is not done in a proper way. Using a spring makes possible to deform the cap stiffening means in direction perpendicular to the cap axis.

In an embodiment of the invention, the cap stiffening means comprises an extension:
- electrically and mechanically coupled to the tubular part,
- located at least partially inside a geometrical contour defined by an infinitely long cylinder extending the tubular part, and
- arranged to electrically contact said switchgear plug when said switchgear plug is inserted into the cap stiffening means.

An electrical contact between the switchgear plug and the cap stiffening means is achieved by a contacting part formed by an extension of the cap stiffening means itself. The fixing of this contacting part to the insulating part is especially easy because it is fixed together with the tubular part. This makes the assembly of the cap especially easy and reliable.

The extension and the tubular part are parts of the same conductive piece, i.e., the cap stiffening means. This configuration provides a reliable and low-resistance electrical contact between the extension and the tubular part of the cap stiffening means. It provides also a reliable and low-resistance electrical contact between the switchgear plug and the tubular part of the cap stiffening means. It therefore insures that the tubular part and the switchgear plug are at the same electrical potential. The tubular part can thus form an efficient guide for the electric field, which properly distributes the electric field to reduce the risk of partial discharges. The cap stiffening means is preferably metallic.

The cap can also be called a "dummy plug".

Preferably, the extension is fixed to the tubular part. More preferably, the tubular part and the extension are parts of a single piece of electrically conductive material.

The infinitely long cylinder is preferably, but not necessarily, a right circular cylinder. The infinitely long cylinder can be seen as circumscribing the tubular part.

The extension can be called an "internal extension" since it extends internally with respect to the infinitely long cylinder.

The tubular part has preferably a cylindrical shape symmetric with respect to a cap axis.

The flexible insulating part provides a good dielectric strength, especially when compressed in an electrical bushing. In other words, the flexible insulating part provides an especially high value for the maximum electric field that the cap can withstand.

Preferably, the extension is elastically flexible.

This makes possible to accommodate for the position of the switchgear plug and improves the electrical contact since the switchgear plug can be pressed against the extension. Considering that the direction of insertion of the switchgear plug is globally parallel to the cap axis, the extension is preferably elastically flexible at least in a direction parallel to the direction of insertion of the switchgear plug.

In an embodiment of the invention, the tubular part and the extension are made of the same conductive wire.

Preferably, the conductive wire comprises a first part which is coiled to form the spring of the tubular part and a second part which forms the extension. This makes the cap stiffening means especially solid.

According to a second aspect, the invention provides a process for producing an electrical coupling unit and comprising the steps of:
- providing a tubular first stiffening means,
- providing a tubular second stiffening means,
- providing a flexible insulating sleeve having a through sleeve hole,
- providing a piece of metal,
- machining said piece of metal to give it a shape comprising:
   ∘ a first connector plug comprising tongues separated by slits,
   ∘ a second connector plug comprising tongues separated by slits, and
   ∘ a connector ring joining together the first and the second connector plugs,
   to create a connector,
- inserting the connector inside the sleeve hole,
- inserting the first stiffening means inside the sleeve hole at a first side of the connector, and
- inserting the second stiffening means inside the sleeve hole at a second side of the connector that is substantially opposite to the first side of the connector.

Since the connector is a single-piece, its production does not require any assembly step. Its machining involves only material-removal. The assembly of the electrical coupling unit is thus especially easy.

### Brief description of the figures

For a better understanding of the present invention, reference will now be made, by way of example, to the accompanying drawings in which:
- Figure 1 illustrates a first and a second electrical switchgears to be electrically connected through three electrical coupling units according to an embodiment of the invention,
- Figure 2 illustrates an exploded view of three electrical coupling units in an embodiment of the invention,
- Figure 3 illustrates a connector to be used in an electrical coupling unit in an embodiment of the invention,
- Figure 4 illustrates a sectional view of a connector to be used in an electrical coupling unit in an embodiment of the invention,
- Figure 5 illustrates a cross section of a sleeve to be used in an electrical coupling unit in an embodiment of the invention,
- Figure 6 is a cross sectional view of an electrical coupling unit according to an embodiment of the invention,
- Figure 7 a is a cross sectional view of a sleeve, a first and a second stiffening means according to an embodiment of the invention, when no force is applied to them,

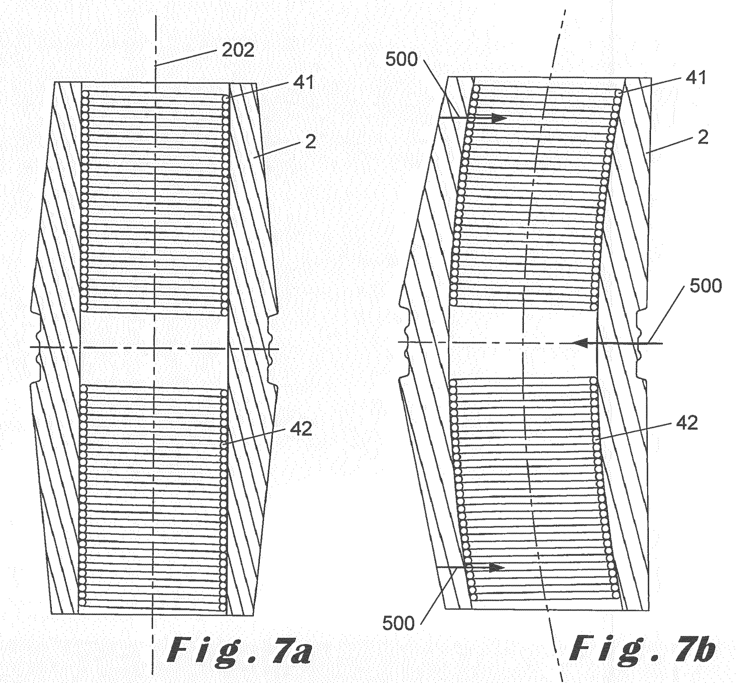

- Figure 7 b is a cross sectional view of a sleeve, a first and a second stiffening means according to an embodiment of the invention that are deformed by a force applied to them,

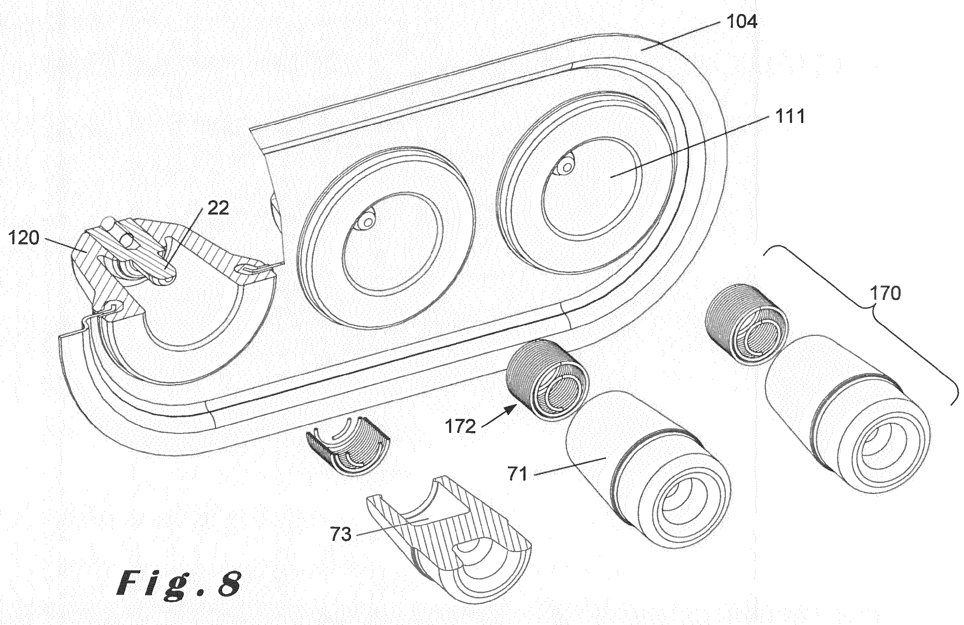

- Figure 8 illustrates an exploded view of three caps in a first embodiment of the cap according to the invention,

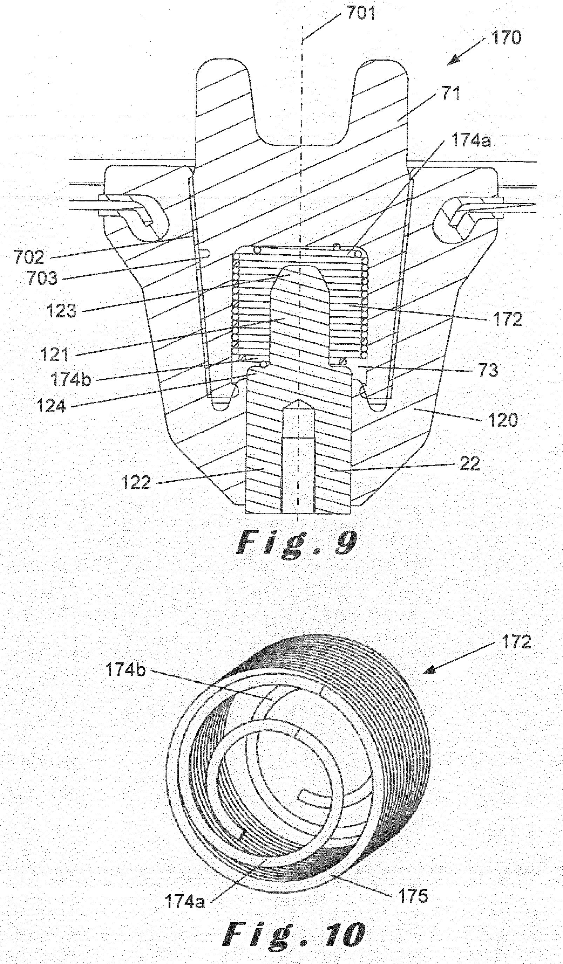

- Figure 9 illustrates a cross sectional view of a cap in the first embodiment of the cap according to the invention,
- Figure 10 illustrates a cap stiffening means in the first embodiment of the cap according to the invention,

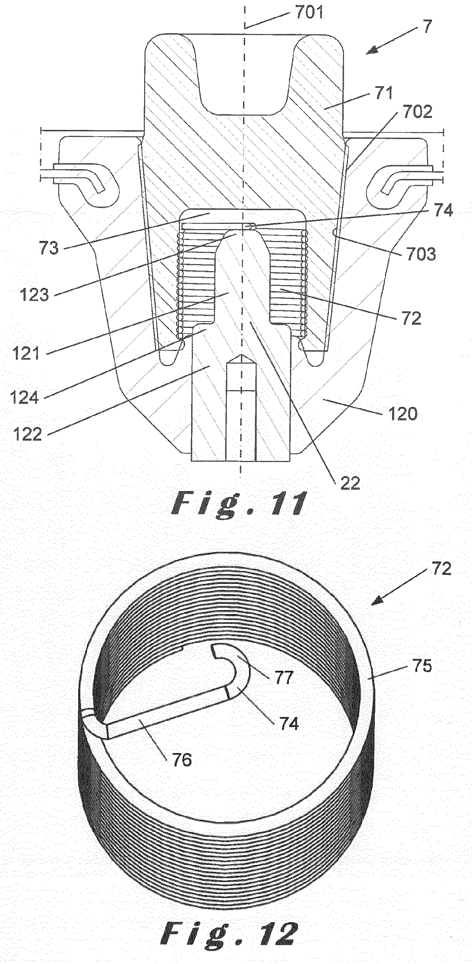

- Figure 11 illustrates a cross sectional view of a cap in a second embodiment of the cap according to the invention, and
- Figure 12 illustrates a cap stiffening means in the second embodiment of the cap according to the invention.

### Description of the invention

The present invention will be described with respect to particular embodiments and with reference to certain drawings but the invention is not limited thereto. The drawings described are only schematic and are nonlimiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

On the figures, identical or analogous elements may be referred by a same number.

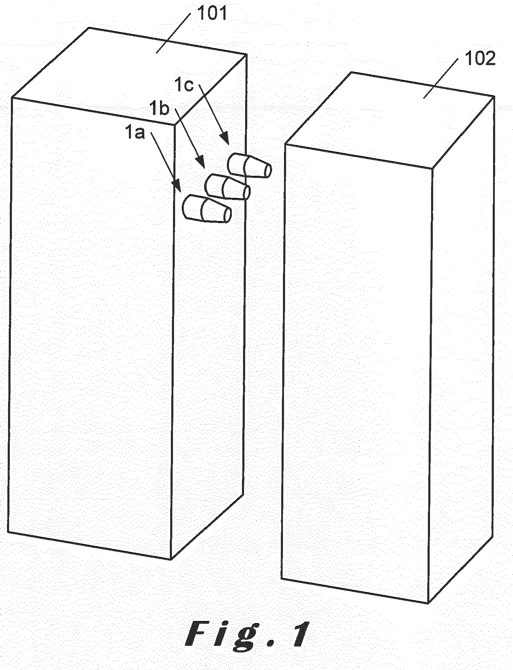

Figure 1 illustrates a first electrical switchgear 101, already installed in a room, and a second electrical switchgear 102, which has to be installed in said room. In this illustration, each electrical switchgear 101, 102 comprises an external connecting device with three electrical bushings, which is typical for three-phase external connecting devices. Both electrical switchgears 101, 102 will be electrically connected through three electrical coupling units 1a, 1b, 1c according to the invention. The three electrical coupling units 1a, 1b, 1c are preferably identical.

If each electrical switchgear comprises an external connecting device with only one electrical bushing (which is typical for single-phase external connecting devices), only one electrical coupling unit is used to connect the two electrical switchgears.

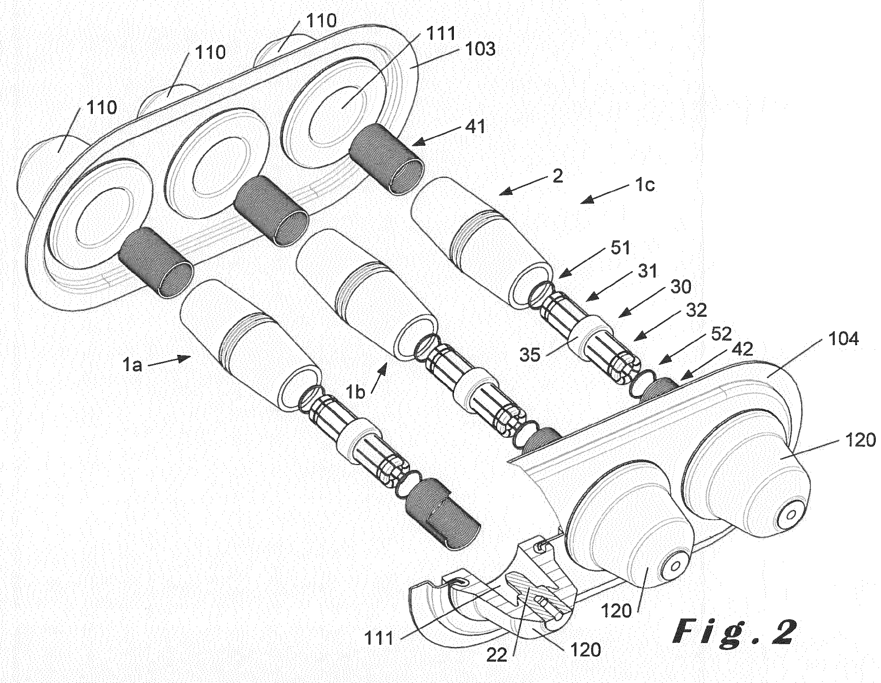

Figure 2 illustrates an exploded view of the three electrical coupling units 1a, 1b, 1c in an embodiment of the invention. The three electrical coupling units 1a, 1b, 1c are preferably designed to connect a first external connecting device 103, which is part of the first electrical switchgear 101, and a second external connecting device 104, which is part of the second electrical switchgear 102. In the illustrated example, each external connecting device 103, 104 comprises three electrical bushings 110, 120. Each electrical bushing 110, 120 comprises a hole 111 and a switchgear plug. Only a second switchgear plug 22 is illustrated on Figure 2.

The electrical bushings 110, 120 may have the shape of a truncated cone as illustrated on Figure 2. The electrical bushings 110, 120 may be inner electrical bushings or outer electrical bushings with respect to the electrical switchgears.

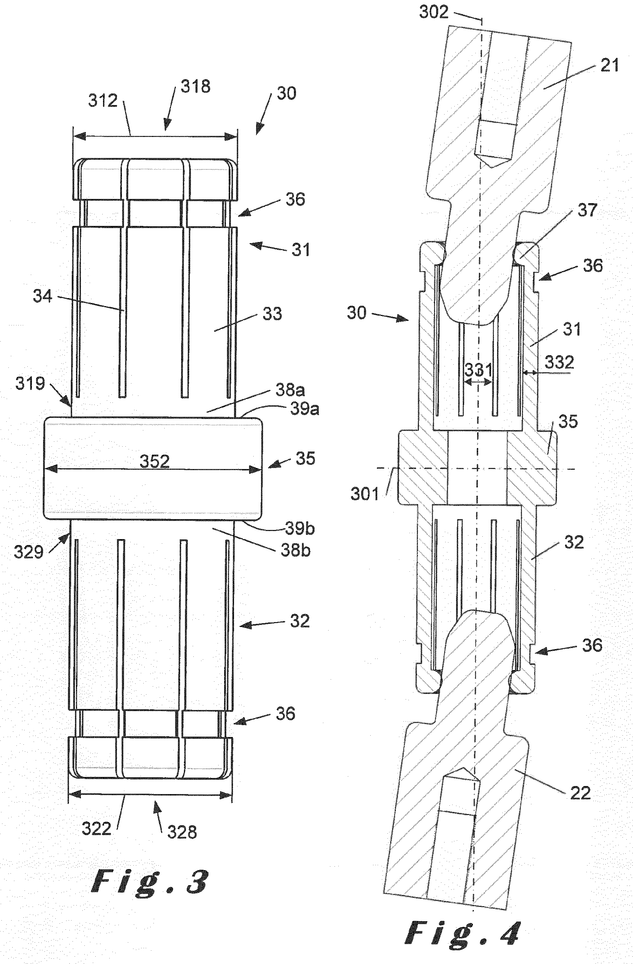

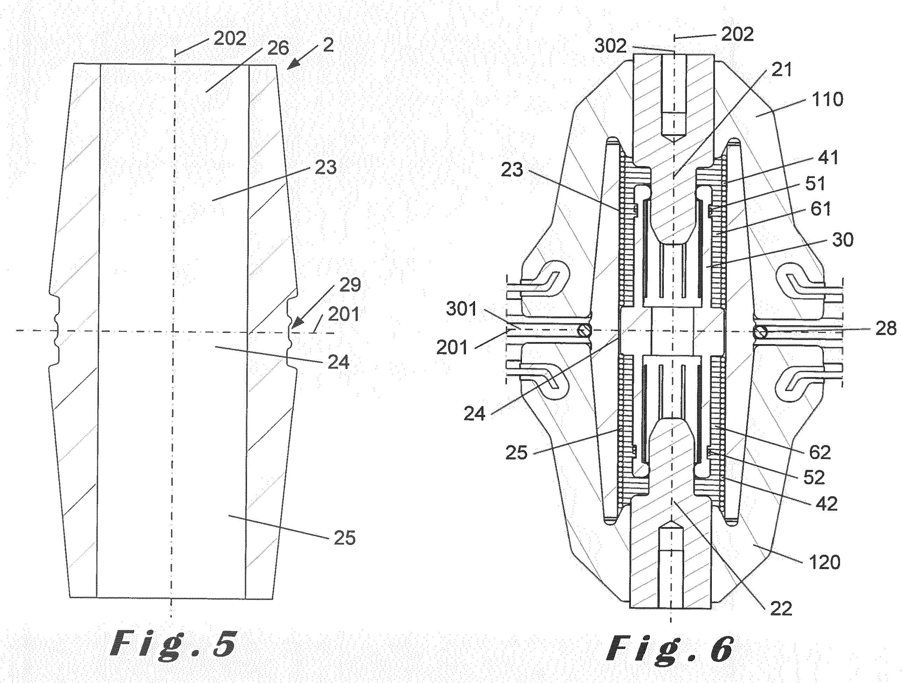

Each electrical coupling unit 1 comprises a connector 30 that will be further described referring to Figures 3 and 4 and a flexible insulating sleeve 2 that will be further described referring to Figure 5. The assembled electrical coupling unit 1 is illustrated at Figure 6.

Each electrical coupling unit 1 also comprises a tubular first stiffening means 41 and a tubular second stiffening means 42. Each electrical coupling unit 1 preferably also comprises a first clamping ring 51 and a second clamping ring 52.

Figure 3 illustrates a connector 30 to be used in an electrical coupling unit 1 in an embodiment of the invention. Figure 4 illustrates a sectional view of a connector 30 to be used in an electrical coupling unit 1 in an embodiment of the invention.

The connector 30 comprises, in this order, a first connector plug 31, a connector ring 35 and a second connector plug 32. The connector 30 is preferably hollow, having a through hole that extends from a first end 318 of the first connector plug 31, through the connector ring 35, to a first end 328 of the second connector plug 32. The connector 30 has preferably a symmetry plan 301. The first 31 and second 32 connector plugs are preferably identical and opposite to each other with respect to the symmetry plan 301 of the connector 30.

In an embodiment of the invention, the connector 30 has essentially a cylindrical symmetry around a symmetry axis 302.

The first 31 and second 32 connector plugs have preferably each a global shape of a hollow cylinder essentially symmetric around the symmetry axis 302.

The connector ring 35 preferably comprises a cylinder with an external diameter 352 and which has both ends partially closed by a first and a second radial partial walls 39a, 39b.

The first connector plug 31 extends preferably perpendicularly from the first radial partial wall 39a, which corresponds to its second end 319. The second connector plug 32 extends preferably perpendicularly from the second radial partial wall 39b, which corresponds to its second end 329.

Preferably, the first connector plug 31 has an external diameter 312 lower than the external diameter 352 of the connector ring 35. Preferably, the second connector plug 32 has an external diameter 322 lower than the external diameter 352 of the connector ring 35.

Preferably, each connector plug 31, 32 comprises a non-split ring 38a, 38b, which is a ring without any radial opening. Preferably, each connector plug 31, 32 comprises tongues 33 separated by longitudinal slits 34. The tongues 33 join the non-split ring 38a, 38b at one end and the slits 34 are opened at the other end, which corresponds to the first end 318, 328 of the connector plugs 31, 32, wherein the switchgear plugs 21, 22 can be inserted.

The tongues 33 preferably have the shape of a piece of cylinder with a circular extension 331 that is higher than a radial extension 332. In other words, each tongue 33 extends more circularly than radially. The circular extension 331 of a tongue 33 can be calculated as the angle of the tongue 33 with respect to the axis 302, expressed in radians, multiplied by the distance between the axis 302 and the tongue 33.

In an embodiment of the invention, the tongues 33 have an internal protrusion 37 at the first end 318, 328 of their connector plug 31, 32, in such a way that they form an annular protrusion. The internal protrusions 37 may have the shape of a semi-circle in cross-section. Due to the internal protrusion 37, each connector plug 31, 32 of the connector 30 forms a tulip contact and the connector 30 can be called a double tulip contact.

In an embodiment of the invention, each connector plug 31, 32 comprises a recess 36 closer to its first end 318, 328 than to its second end 319, 329. The recess 36 is formed in the external surface of the connector plug 31, 32.

Figure 4 also illustrates the switchgear plugs 21, 22 inserted in the connector plugs 31, 32 in a situation where the connector 35 is tilted with respect to the switchgear plugs 21, 22 because of a misalignment between the switchgear plugs 21, 22.

The connector 30 is preferably made by machining a piece of metal.

Figure 5 illustrates a cross section of a sleeve 2 to be used in an electrical coupling unit in an embodiment of the invention. The sleeve 2 has a through hole 26 that has preferably a cylindrical surface symmetrical with respect to a sleeve axis 202 when no force applies to the sleeve 2.

The sleeve 2 preferably comprises a circular groove 29 in its external wall to maintain a grounding ring 28 (visible at Figure 6). The sleeve 2 has preferably a symmetry plan 201. The sleeve 2 has a first end portion 23 that receives the first stiffening means 41, a second end portion 25 that receives the second stiffening means 42 and a central portion 24 that receives the connector ring 35.

In an embodiment of the invention, the internal diameter of the sleeve is constant along the stiffening means. In another embodiment of the invention, the internal diameter of the sleeve varies along the sleeve.

Figure 6 is a cross sectional view of an electrical coupling unit 1 according to an embodiment of the invention wherein the electrical coupling unit 1 appears as inserted between a first electrical bushing 110 comprising a first switchgear plug 21 and a second electrical bushing 120 comprising a second switchgear plug 22.

When the two switchgear plugs 21, 22 are aligned as presented at Figure 6, the sleeve 201 and the connector 301 symmetry plans are preferably at the same position, and the sleeve 202 and the connector 302 symmetry axes are preferably at the same position.

If the two switchgear plugs 21, 22 are not aligned, the sleeve 2 may be bent. In an embodiment of the invention, especially the central portion 24 bends with respect to the two end portions 23, 25 of the sleeve.

The first 41 and the second 42 stiffening means are preferably springs with spring axes aligned to the axis 202 of the sleeve 2.

Preferably, the sleeve 2 internal diameter and the first, respectively second, stiffening means 41, 42 external diameter are such that the first 41, respectively second 42, stiffening means is mechanically blocked into the sleeve hole 26, for example because the first 41, respectively second 42, stiffening means external diameter is equal to or just lower than the internal diameter of the sleeve 2. These dimensions are chosen in such a way that the first 41 and the second 42 stiffening means can be manually inserted into the sleeve hole 26.

The sleeve 2 is preferably deformable in any direction perpendicular to its axis 202 and the stiffening means 41, 42 are able to reinforce the first 23 and the second 25 end portions of the sleeve 2. Especially in an embodiment of the invention wherein the stiffening means 41, 42 are springs, preferably metallic springs, some deformations of the sleeve 2 are still possible even when the stiffening means 41, 42 are inserted within the sleeve hole 26.

Preferably, the sleeve 2 internal diameter and the connector ring 35 external diameter are such that the connector ring 35 is mechanically blocked into the sleeve hole 26, for example because the connector ring 35 external diameter is equal or just lower than the internal diameter of the sleeve 2.

Moreover, the connector ring 35 external diameter is preferably higher than the first 41 and second 42 stiffening means internal diameters to be blocked between them.

The first connector plug 31 is inside the first stiffening means 41, with a gap 61 between the external surface of the first connector plug 31 and the internal surface of the first stiffening means 41. For example, the external diameter 312 of the first connector plug 31 can be lower than the internal diameter of the first stiffening means 41. The second connector plug 32 is inside the second stiffening means 42, with a gap 62 between the external surface of the second connector plug 32 and the internal surface of the second stiffening means 42. For example, the external diameter 322 of the second connector plug 32 can be lower than the internal diameter of the second stiffening means 42.

The difference between the first 31, respectively second 32, connector plug external diameter and the first 41, respectively second 42, stiffening means internal diameter can be between 1 and 5 mm, preferably around 3 mm.

In an embodiment of the invention, a grounding ring 28 is received in the groove 29 of the sleeve 2 in order to surround the sleeve 2, approximately in the symmetry plan 201. The grounding ring 28 is preferably a spring with a circular axis forming a circle around the sleeve 2. The grounding ring 28 may also be a wire. The grounding ring 28 is arranged to be electrically connected to ground. The grounding ring 28 is preferably made of nonmagnetic stainless steel.

In an embodiment of the invention, a first clamping ring 51 is placed in the recess 36 of the first connector plug 31 and a second clamping ring 52 is placed in the recess 36 of the second connector plug 32. The clamping rings 51, 52 are preferably identical metallic springs.

In an embodiment of the invention, the radial extension of the first and the second gaps is between 1.0 and 7.0 mm, preferably between 1.5 and 5.0 mm, even more preferably between 2.0 and 3.0 mm.

In an embodiment of the invention, the external diameter 352 of the connector ring 35 is 32 mm; the external diameters 312, 322 of the connector plugs 31, 32 are 24 mm; the internal diameter of the sleeve 2 (which is the diameter of the sleeve hole 26) is 32 mm; the external diameter of the stiffening means is 32 mm and the internal diameter of the stiffening means is 28.8 mm. The radial extension of the first 61 and the second 62 gaps is therefore about 2.4 mm.

Figure 7 illustrates a sleeve 2, a first 41 and a second 42 stiffening means according to an embodiment of the invention. They are illustrated in Figure 7a without any force applied to them. They are illustrated in Figure 7b deformed in case a force as shown by arrows 500 applied to them. Preferred use of springs for the first 41 and a second 42 stiffening means makes them deformable in a direction perpendicular to the sleeve axis 202. Figure 7b illustrates that the springs provide a radial stiffening and a flexibility in a direction perpendicular to the symmetry axis of the sleeve 2 to the electrical coupling unit 1. The sleeve axis 202 is actually deformed by the force indicated by the arrows 500.

Figures 8 to 12 illustrate two embodiments of a cap 7, 170 according to the invention. The cap 7, 170 can be used to close one of the electrical bushings 110, 120 of the external connecting device 103, 104 when no electrical coupling unit 1 is plugged into this electrical bushing 110, 120.

The cap 7, 170 has preferably a general axis, called the cap axis 701 (visible Figures 9 and 11). Some elements of the cap 7, 170 have a cylindrical symmetry with respect to the cap axis 701, some may not have it. The switchgear plug 22 is preferably inserted along the cap axis 701, but it might be tilted or shifted with respect to the cap axis 701, for example because of imperfections in the external connecting device 104.

The cap 7, 170 comprises a flexible insulating part 71 that is partially received in the electrical bushing 120. The insulating part 71 comprises a non-through hole 73. The non-through hole is opened in the direction of the switchgear plug 22 and close is the opposite direction.

The insulating part 71 preferably comprises an elastomer, more preferably comprises silicone or ethylene propylene diene monomer (EPDM) rubber. The material of the sleeve has preferably a Young's modulus between 1 and 1000 MPa, more preferably between 10 and 100 MPa. Because of its flexibility, the insulating part 71 is able to withstand deformation. It is especially useful during the positioning of the cap 7, 170 in the electrical bushing. In Figures 9 and 11, the line 702 represents the shape of the insulating part 71 when it is outside of the electrical bushing, and the line 703 represents the shape of the insulating part 71 when it is positioned in the electrical bushing. The insulating part 71 is compressed when inserted in the electrical bushing, which improves its ability to prevent leakages.

The cap 7, 170 also comprises a conductive cap stiffening means 72, 172 inserted in the non-through hole 73. The cap stiffening means 72, 172 preferably comprises a tubular part 75, 175 and an extension 74, 174a, 174b. The tubular part 75 is preferably a spring. The extension 74, 174b contacts the first switchgear plug 21 or the second switchgear plug 22, depending on which external connecting device it is plugged on. It is possible, within the frame of the invention, that the extension 74 contacts any part of the switchgear plug 21, 22.

The extension 74, 174a, 174b is located at least partially inside a geometrical contour defined by an infinitely long cylinder extending the tubular part 75. This infinitely long cylinder comprises the tubular part 75 and a virtual prolongation of the tubular part 75.

The extension 74, 174a, 174b is preferably formed by the same conductive wire as the spring of the tubular part 75, 175. In an embodiment of the invention, the conductive wire has a diameter between 1 and 2 mm, preferably has a diameter of 1.6 mm.

Preferably, the insulating part 71 internal diameter and the tubular part 75, 175 external diameter are such that the cap stiffening means 72, 172 is mechanically blocked into the non-through hole 73, for example because the tubular part 75, 175 external diameter is equal to or just lower than the internal diameter of the insulating part 71. These dimensions are chosen in such a way that the cap stiffening means 72, 172 can be manually inserted into the non-through hole 73.

In an embodiment of the invention, the internal diameter of the insulating part 71 (which is the diameter of the non-through hole 73) is 32 mm; the external diameter of the tubular part 75, 175 is 32 mm and the internal diameter of the tubular part 75, 175 is 28.8 mm.

In an embodiment of the invention, the cap stiffening means 72, 172 is metallic. In an embodiment of the invention, the cap stiffening means 72, 172 comprises nonmagnetic stainless steel, preferably is made of nonmagnetic stainless steel. In an embodiment of the invention, the conductive wire included in the tubular part 75, 175 and the extension 74, 174a, 174b is made of nonmagnetic stainless steel.

As visible on Figure 9, the switchgear plug 22 may comprise a wide part 122 attached to the switchgear and a narrow part 121 attached to the wide part 122. The narrow part 121 ends with a tip 123. Since the narrow part 121 is narrower than the wide part 122, the wide part 122 comprises an external transversal surface 124 designed to be essentially perpendicular to the axis 701.

Figures 8 to 10 illustrate the cap 170 in an first embodiment of the cap according to the invention. In the first embodiment of the cap 170, the cap stiffening means 172 comprises a first and a second extensions 174a, 174b. The first extension 174a is located at a first end of the tubular part 175 and the second extension 174b is located at a second end of the tubular part 175, which is opposite to the first end. The first 174a and the second 174b extensions are preferably symmetrical, in such a way that the cap stiffening means 172 can be inserted in both ways into the non-through hole 73. Preferably, the extensions 174a, 174b extend in a curved form from the tubular part 175. For example, each of the extensions 174a, 174b can form a spiral which starts at the tubular part 75 and then converges with respect to the infinitely long cylinder extending the tubular part 75.

The dimensions of the tubular part 175 and the extensions 174a, 174b are preferably chosen in such a way that one of the extensions 174a, 174b contacts the traversal surface 124 of the switchgear plug 22. For example, the length of the tubular part 175 taken in a direction parallel to the axis 701 can be around 24 mm, the diameter of the tubular part 175 can be 32.3 mm and the extensions 174a, 174b can extend up to a distance to the axis 701 of 7.7 mm.

Figures 11 and 12 illustrate the cap 7 in an second embodiment of the cap according to the invention. In the second embodiment of the cap 7, the cap stiffening means 72 comprises a single extension 74 which is located at a first end of the tubular part 75. This first end of the tubular part 75 is preferably the most inner end of the tubular part 75 inside the non-through hole 73, as visible on Figure 11. The extension 74 preferably extends to the middle of the cylinder extending the tubular part 75, in order to contact the tip 123 of the switchgear plug 22. The extension 74 preferably comprises a first part 76 which extends radially from the tubular part 75 towards the inside of the infinitely long cylinder extending the tubular part 75. The first part 76 of the extension goes towards the inside of the infinitely long cylinder extending the tubular part. The first part 76 is preferably substantially radial with respect to this cylinder. The extension 74 also preferably comprises a second part 77 which extends in a curved form from the first part 76. The second part 77 may have the shape of a hook or the shape of a U. It makes especially easy a bending of the extension 74 in the direction of the cap axis 701.

In other words, the invention relates to an electrical coupling unit 1 to connect two external connecting devices 103, 104 of two medium-voltage electrical switchgears. The electrical coupling unit 1 comprises a flexible insulating sleeve 2 and a connector 30 inserted within the sleeve 2. The connector 30 is made of one conductive piece and comprises two connector plugs 31, 32 joined by a central connector ring 35. Radial compression of the hole 26 of the sleeve 2 is avoided by stiffening means 41, 42 placed between the internal surface of the sleeve 2 and the connector plugs 3, 32 of the connector 30.

Although the present invention has been described above with respect to particular embodiments, it will readily be appreciated that other embodiments are also possible.

## Claims

1. Electrical coupling unit (1a; 1b; 1c) for interconnecting a first electrical switchgear (101) having a first switchgear plug (21) and an second electrical switchgear (102) having a second switchgear plug (22) and comprising:
• a connector (30) comprising:
∘ a first connector plug (31) for engaging with the first switchgear plug (21);
∘ a second connector plug (32) for engaging with the second switchgear plug (22);
∘ a connector ring (35) located between said first (31) and second (32) connector plugs;
• a tubular first stiffening means (41) surrounding at least part of the first connector plug (31),
• a tubular second stiffening means (42) surrounding at least part of the second connector plug (32),
• a flexible insulating sleeve (2) having a through sleeve hole (26) surrounding the first stiffening means (41), the connector (30) and the second stiffening means (42),
**characterized in that**
• the first connector plug (31), the second connector plug (32) and the connector ring (35) are parts of a single piece of electrically conductive material;
• the dimensions of the first connector plug (31) and the first stiffening means (41) are such that a first gap (61) exists between the first connector plug (31) and the first stiffening means (41), and
• the dimensions of the second connector plug (32) and the second stiffening means (42) are such that a second gap (62) exists between the second connector plug (32) and the second stiffening means (42).

2. Electrical coupling unit (1a; 1b; 1c) according to claim 1, **characterized in that**:
• the first connector plug (31) has a first end (318) for engaging with the first switchgear plug (21) and comprises tongues (33) separated by slits (34) that are opened at said first end (318); and
• the second connector plug (32) has a first end (328) for engaging with the second switchgear plug (22) and comprises tongues (33) separated by slits (34) that are opened at said first end (328),
the tongues (33) of each connector plug (31;32) preferably forming a hollow cylinder and each tongue (33) preferably extending more circularly than radially.

3. Electrical coupling unit (1a; 1b; 1c) according to claim 2, **characterized in that** at least some tongues (33), preferably all tongues (33) have an internal protrusion (37) at the first end (318; 328) of the connector plug (31; 32), the internal protrusions (37) of the tongues (33) having preferably a semi-circular cross-section.

4. Electrical coupling unit (1a; 1b; 1c) according to claim 3, **characterized in that** the internal protrusions (37) of the tongues (33) form an annular protrusion.

5. Electrical coupling unit (1a; 1b; 1c) according to any of the preceding claims, **characterized in that** each connector plug (31; 32) has a second end (319; 329) connected to the connector ring (35) and comprises a non-split ring (38a; 38b) at said second end (319; 329).

6. Electrical coupling unit (1a; 1b; 1c) according to any of the preceding claims, **characterized in that** the first (41) and the second (42) stiffening means are springs, preferably metallic springs.

7. Electrical coupling unit (1a; 1b; 1c) according to any of the preceding claims, **characterized in that** each connector plug (31; 32) comprises a recess (36) for receiving a clamping means.

8. Electrical coupling unit (1a; 1b; 1c) according to any of the preceding claims further comprising a first clamping ring (51) placed around the first connector plug (31) and inside the first stiffening means (41), and a second clamping ring (52) placed around the second connector plug (32) and inside the second stiffening means (42), the first (51) and the second (52) clamping rings being preferably springs.

9. Electrical coupling unit (1a; 1b; 1c) according to any of the preceding claims further comprising a grounding ring (28) surrounding the sleeve (2), the grounding ring (28) being preferably a spring with a spring axis forming a circle around the sleeve (2).

10. Interconnection kit of parts comprising:
• an electrical coupling unit (1a; 1b; 1c) according to any of the preceding claims, and
• a cap (7; 170) for closing an electrical bushing (110; 120) of an external connecting device (103; 104) of an electrical switchgear (101;102) and comprising:
- a flexible insulating part (71) configured to be at least partially received in said electrical bushing and comprising a non-through hole (73), and
- a conductive cap stiffening means (72; 172) located inside the non-through hole (73), mechanically coupled to the insulating part (71), and comprising a tubular part (75) for receiving a switchgear plug (21; 22) of the electrical bushing.

11. Interconnection kit of parts according to the preceding claim, **characterized in that** the tubular part (75) comprises a spring, preferably, the tubular part (75) is a spring.

12. Interconnection kit of parts according to claim 10 or 11, **characterized in that** the cap stiffening means (72; 172) comprises an extension (74):
• electrically and mechanically coupled to the tubular part (75),
• located at least partially inside a geometrical contour defined by an infinitely long cylinder extending the tubular part (75), and
• arranged to electrically contact said switchgear plug (21; 22) when said switchgear plug (21; 22) is inserted into the cap stiffening means (72; 172).

13. Interconnection kit of parts according to the preceding claim, **characterized in that** the extension (74) is elastically flexible.

14. Interconnection kit of parts according to claim 12 or 13, **characterized in that** the tubular part (75) and the extension (74) are made of the same conductive wire.

15. Process for producing an electrical coupling unit (1a; 1b; 1c) and comprising the steps of:
• providing a tubular first stiffening means (41),
• providing a tubular second stiffening means (42),
• providing a flexible insulating sleeve (2) having a through sleeve hole (26),
• providing a piece of metal,
• machining said piece of metal to give it a shape comprising:
∘ a first connector plug (31) comprising tongues (33) separated by slits (34),
∘ a second connector plug (32) comprising tongues (33) separated by slits (34), and
∘ a connector ring (35) joining together the first (31) and the second (32) connector plugs,
to create a connector (30),
• inserting the connector (30) inside the sleeve hole (26),
• inserting the first stiffening means (41) inside the sleeve hole (26) at a first side of the connector (30), and
• inserting the second stiffening means (42) inside the sleeve hole (26) at a second side of the connector (30) that is substantially opposite to the first side of the connector (30).

## Patentansprüche

1. Elektrische Kupplungseinheit (1a; 1b; 1c) zum Zusammenschalten einer ersten Schaltanlage (101), die einen ersten Schaltanlagenstecker (21) aufweist, und einer zweiten elektrischen Schaltanlage (102), die einen zweiten Schaltanlagenstecker (22) aufweist, und umfassend:
• einen Verbinder (30), umfassend:
∘ einen ersten elektrischen Verbinderstecker (31) zum Eingreifen in den ersten Schaltanlagenstecker (21);
∘ einen zweiten elektrischen Verbinderstecker (32) zum Eingreifen in den zweiten Schaltanlagenstecker (22);
∘ einen Verbinderring (35), der zwischen dem ersten (31) und zweiten (32) Verbinderstecker liegt;
• ein rohrförmiges erstes Versteifungsmittel (41), das mindestens einen Teil des ersten Verbindersteckers (31) umgibt,
• ein rohrförmiges zweites Versteifungsmittel (42), das mindestens einen Teil des zweiten Verbindersteckers (32) umgibt,
• eine bewegliche isolierende Hülle (2), die eine die Hülle durchquerende Öffnung (26) aufweist, die das erste Versteifungsmittel (41), den Verbinder (30) und das zweite Versteifungsmittel (42) umgibt,
**dadurch gekennzeichnet, dass**
• der erste Verbinderstecker (31), der zweite Verbinderstecker (32) und der Verbinderring (35) Teile eines einzigen Stücks aus elektrisch leitfähigem Material sind;
• die Abmessungen des ersten Verbindersteckers (31) und des ersten Versteifungsmittels (41) so sind, dass ein erster Spalt (61) zwischen dem ersten Verbinderstecker (31) und dem ersten Versteifungsmittel (41) besteht, und
• die Abmessungen des zweiten Verbindersteckers (32) und des zweiten Versteifungsmittels (42) so sind, dass ein zweiter Spalt (62) zwischen dem zweiten Verbinderstecker (32) und dem zweiten Versteifungsmittel (42) besteht.

2. Elektrische Kupplungseinheit (1a; 1b; 1c) nach Anspruch 1, **dadurch gekennzeichnet, dass**:
• der erste Verbinderstecker (31) ein erstes Ende (318) zum Eingreifen in den ersten Schaltanlagenstecker (21) aufweist und Zungen (33) umfasst, die durch Schlitze (34) getrennt sind, die am ersten Ende (318) geöffnet sind; und
• der zweite Verbinderstecker (32) ein erstes Ende (328) zum Eingreifen in den zweiten Schaltanlagenstecker (22) aufweist und Zungen (33) umfasst, die durch Schlitze (34) getrennt sind, die am ersten Ende (328) geöffnet sind,
wobei die Zungen (33) von jedem Verbinderstecker (31; 32) vorzugsweise einen Hohlzylinder bilden und jede Zunge (33) sich vorzugsweise mehr kreisförmig als radial erstreckt.

3. Elektrische Kupplungseinheit (1a ; 1b ; 1c) nach Anspruch 2, **dadurch gekennzeichnet, dass** mindestens einige Zungen (33), vorzugsweise alle Zungen (33), am ersten Ende (318; 328) des Verbindersteckers (31; 32) einen inneren Vorsprung (37) aufweisen, wobei der innere Vorsprung (37) der Zungen (33) vorzugsweise einen halbkreisförmigen Querschnitt aufweist.

4. Elektrische Kupplungseinheit (1a; 1b; 1c) nach Anspruch 3, **dadurch gekennzeichnet, dass** der innere Vorsprung (37) der Zungen (33) einen ringförmigen Vorsprung bildet.

5. Elektrische Kupplungseinheit (1a; 1b; 1c) nach einem der vorstehenden Ansprüche, **dadurch gekennzeichnet, dass** jeder Verbinderstecker (31; 32) ein zweites Ende (319; 329) aufweist, das mit dem Verbinderring (35) verbunden ist, und einen nichtgespaltenen Ring (38a; 38b) am zweiten Ende (319; 329) umfasst.

6. Elektrische Kupplungseinheit (1a; 1b; 1c) nach einem der vorstehenden Ansprüche, **dadurch gekennzeichnet, dass** das erste (41) und das zweite (42) Versteifungsmittel Federn, vorzugsweise metallene Federn sind.

7. Elektrische Kupplungseinheit (1a; 1b; 1c) nach einem der vorstehenden Ansprüche, **dadurch gekennzeichnet, dass** jeder Verbinderstecker (31; 32) eine Aussparung (36) zur Aufnahme eines Klemmmittels umfasst.

8. Elektrische Kupplungseinheit (1a; 1b; 1c) nach einem der vorstehenden Ansprüche, weiter umfassend einen ersten Klemmring (51), der um den ersten Verbinderstecker (31) und innerhalb des ersten Versteifungsmittels (41) platziert ist, und einen zweiten Klemmring (52), der um den zweiten Verbinderstecker (32) und innerhalb des zweiten Versteifungsmittels (42) platziert ist, wobei der erste (51) und der zweite (52) Klemmring vorzugsweise Federn sind.

9. Elektrische Kupplungseinheit (1a; 1b; 1c) nach einem der vorstehenden Ansprüche, weiter umfassend einen Erdungsring (28), der die Hülle (2) umgibt, wobei der Erdungsring (28) vorzugsweise eine Feder mit einer Federachse, die einen Kreis um die Hülle (2) bildet, ist.

10. Teilesatz zur Zusammenschaltung, umfassend:
• eine elektrische Kupplungseinheit (1a; 1b; 1c) nach einem der vorstehenden Ansprüche, und
• eine Kappe (7; 170) zum Schließen einer elektrischen Buchse (110; 120) einer äußeren Verbindungsvorrichtung (103; 104) einer elektrischen Schaltanlage (101; 102), und umfassend:
- ein bewegliches isolierendes Teil (71), das konfiguriert ist, um mindestens teilweise in der elektrischen Buchse aufgenommen zu werden und eine nichtdurchquerende Öffnung (73) umfasst, und
- ein leitfähiges Kappenversteifungsmittel (72; 172), das innerhalb der nichtdurchgehenden Öffnung (73) liegt, mechanisch an das isolierende Teil (71) gekuppelt, und ein rohrförmiges Teil (75) zum Aufnehmen eines Schaltanlagensteckers (21; 22) der elektrischen Buchse umfassend.

11. Teilesatz zum Zusammenschalten nach dem vorstehenden Anspruch, **dadurch gekennzeichnet, dass** das rohrförmige Teil (75) eine Feder umfasst, vorzugsweise ist das rohrförmige Teil (75) eine Feder.

12. Teilesatz zum Zusammenschalten nach Anspruch 10 oder 11, **dadurch gekennzeichnet, dass** das Kappenversteifungsmittel (72; 172) eine Verlängerung (74) umfasst, die:
• elektrisch und mechanisch an das rohrförmige Teil (75) gekuppelt ist,
• mindestens teilweise innerhalb eines geometrischen Umrisses liegt, der durch einen unendlich langen Zylinder, der das rohrförmige Teil (75) verlängert, definiert ist, und
• angeordnet ist, um den Schaltanlagenstecker (21; 22) elektrisch zu kontaktieren, wenn der Schaltanlagenstecker (21; 22) in das Kappenversteifungsmittel (72; 172) eingeführt wird.

13. Teilesatz zum Zusammenschalten nach dem vorstehenden Anspruch, **dadurch gekennzeichnet, dass** die Verlängerung (74) elastisch beweglich ist.

14. Teilesatz zum Zusammenschalten nach Anspruch 12 oder 13, **dadurch gekennzeichnet, dass** das rohrförmige Teil (75) und die Verlängerung (74) aus dem gleichen leitfähigen Draht gefertigt sind.

15. Prozess zum Herstellen einer elektrischen Kupplungseinheit (1a; 1b; 1c) und umfassend die folgenden Schritte:
• Bereitstellen eines rohrförmigen ersten Versteifungsmittels (41),
• Bereitstellen eines rohrförmigen zweiten Versteifungsmittels (42),
• Bereitstellen einer beweglichen isolierenden Hülle (2), die eine die Hülle durchquerende Öffnung (26) aufweist,
• Bereitstellen eines Metallstücks,
• Bearbeiten des Metallstücks, um ihm eine Gestalt zu verleihen, umfassend:
∘ einen ersten Verbinderstecker (31), umfassend Zungen (33), die durch Schlitze (34) getrennt sind,
∘ einen zweiten Verbinderstecker (32), umfassend Zungen (33), die durch Schlitze (34) getrennt sind, und
∘ einen Verbinderring (35), der den ersten (31) und den zweiten (32) Verbinderstecker zusammenfügt,
um einen Verbinder (30) zu erzeugen,
• Einführen des Verbinders (30) innerhalb der Hüllenöffnung (26),
• Einführen des ersten Versteifungsmittels (41) innerhalb der Hüllenöffnung (26) an einer ersten Seite des Verbinders (30), und
• Einführen des zweiten Versteifungsmittels (42) innerhalb der Hüllenöffnung (26) an einer zweiten Seite des Verbinders (30), die im Wesentlichen gegenüber von der ersten Seite des Verbinders (30) ist.

## Revendications

1. Unité de couplage électrique (1a ; 1b ; 1c) pour interconnecter un premier mécanisme de commutation électrique (101) ayant une première fiche de mécanisme de commutation (21) et un second mécanisme de commutation électrique (102) ayant une seconde fiche de mécanisme de commutation (22) et comprenant :
un connecteur (30) comprenant :
une première fiche de connecteur (31) pour venir en contact avec la première fiche de mécanisme de commutation (21) ;
une seconde fiche de connecteur (32) pour venir en contact avec la seconde fiche de mécanisme de commutation (22) ;
un anneau de connecteur (35) situé entre lesdites première (31) et seconde (32) fiches de connecteur ;
un premier moyen de raidissement tubulaire (41) entourant au moins une partie de la première fiche de connecteur (31),
un second moyen de raidissement tubulaire (42) entourant au moins une partie de la seconde fiche de connecteur (32),
un manchon isolant flexible (2) ayant un trou de manchon traversant (26) entourant le premier moyen de raidissement (41), le connecteur (30) et le second moyen de raidissement (42),
**caractérisée en ce que**
la première fiche de connecteur (31), la seconde fiche de connecteur (32) et l'anneau de connecteur (35) sont des pièces d'un seul morceau de matériau électriquement conducteur ;
les dimensions de la première fiche de connecteur (31) et du premier moyen de raidissement (41) sont telles qu'un premier écartement (61) existe entre la première fiche de connecteur (31) et le premier moyen de raidissement (41), et
les dimensions de la seconde fiche de connecteur (32) et du second moyen de raidissement (42) sont telles qu'un second écartement (62) existe entre la seconde fiche de connecteur (32) et le second moyen de raidissement (42).

2. Unité de couplage électrique (1a ; 1b; 1c) selon la revendication 1, **caractérisée en ce que** :
la première fiche de connecteur (31) a une première extrémité (318) pour venir en contact avec la première fiche de mécanisme de commutation (21) et comprend des languettes (33) séparées par des fentes (34) qui sont ouvertes au niveau de ladite première extrémité (318) ; et
la seconde fiche de connecteur (32) a une première extrémité (328) pour venir en contact avec la seconde fiche de mécanisme de commutation (22) et comprend des languettes (33) séparées par des fentes (34) qui sont ouvertes au niveau de ladite première extrémité (328),
les languettes (33) de chaque fiche de connecteur (31 ; 32) formant de préférence un cylindre creux et chaque languette (33) s'étendant de préférence de façon davantage circulaire que radiale.

3. Unité de couplage électrique (1a ; 1b ; 1c) selon la revendication 2, **caractérisée en ce qu'**au moins certaines languettes (33), de préférence toutes les languettes (33) ont une protubérance interne (37) au niveau de la première extrémité (318 ; 328) de la fiche de connecteur (31 ; 32), les protubérances internes (37) des languettes (33) ayant de préférence une section transversale semi-circulaire.

4. Unité de couplage électrique (1a ; 1b ; 1c) selon la revendication 3, **caractérisée en ce que** les protubérances internes (37) des languettes (33) forment une protubérance annulaire.

5. Unité de couplage électrique (1a ; 1b; 1c) selon l'une quelconque des revendications précédentes, **caractérisée en ce que** chaque fiche de connecteur (31 ; 32) a une seconde extrémité (319 ; 329) connectée à l'anneau de connecteur (35) et comprend un anneau non fendu (38a ; 38b) au niveau de ladite seconde extrémité (319 ; 329).

6. Unité de couplage électrique (1a ; 1b; 1c) selon l'une quelconque des revendications précédentes, **caractérisée en ce que** les premier (41) et second (42) moyens de raidissement sont des ressorts, de préférence des ressorts métalliques.

7. Unité de couplage électrique (1a ; 1b; 1c) selon l'une quelconque des revendications précédentes, **caractérisée en ce que** chaque fiche de connecteur (31 ; 32) comprend un évidement (36) pour recevoir un moyen de serrage.

8. Unité de couplage électrique (1a ; 1b; 1c) selon l'une quelconque des revendications précédentes, comprenant en outre un premier anneau de serrage (51) placé autour de la première fiche de connecteur (31) et à l'intérieur du premier moyen de raidissement (41), et un second anneau de serrage (52) placé autour de la seconde fiche de connecteur (32) et à l'intérieur du second moyen de raidissement (42), les premier (51) et second (52) anneaux de serrage étant de préférence des ressorts.

9. Unité de couplage électrique (1a ; 1b; 1c) selon l'une quelconque des revendications précédentes, comprenant en outre un anneau de mise à la terre (28) entourant le manchon (2), l'anneau de mise à la terre (28) étant de préférence un ressort avec un axe de ressort formant un cercle autour du manchon (2).

10. Nécessaire de pièces d'interconnexion comprenant :
une unité de couplage électrique (1a; 1b; 1c) selon l'une quelconque des revendications précédentes, et
un chapeau (7 ; 170) pour fermer une douille électrique (110 ; 120) d'un dispositif de connexion externe (103 ; 104) d'un mécanisme de commutation électrique (101 ; 102) et comprenant :
une pièce isolante flexible (71) configurée pour être reçue au moins partiellement dans ladite douille électrique et comprenant un trou non traversant (73), et
un moyen de raidissement de chapeau conducteur (72 ; 172) situé à l'intérieur du trou non traversant (73), couplé mécaniquement à la pièce isolante (71), et comprenant une pièce tubulaire (75) pour recevoir une fiche de mécanisme de commutation (21 ; 22) de la douille électrique.

11. Nécessaire de pièces d'interconnexion selon la revendication précédente, **caractérisé en ce que** la pièce tubulaire (75) comprend un ressort, de préférence, la pièce tubulaire (75) est un ressort.

12. Nécessaire de pièces d'interconnexion selon la revendication 10 ou 11, **caractérisé en ce que** le moyen de raidissement de chapeau (72 ; 172) comprend un prolongement (74) :
couplé électriquement et mécaniquement à la pièce tubulaire (75),
situé au moins partiellement à l'intérieur d'un contour géométrique défini par un cylindre infiniment long prolongeant la pièce tubulaire (75), et
agencé pour entrer en contact électrique avec ladite fiche de mécanisme de commutation (21 ; 22) lorsque ladite fiche de mécanisme de commutation (21 ; 22) est insérée dans le moyen de raidissement de chapeau (72 ; 172).

13. Nécessaire de pièces d'interconnexion selon la revendication précédente, **caractérisé en ce que** le prolongement (74) est flexible élastiquement.

14. Nécessaire de pièces d'interconnexion selon la revendication 12 ou 13, **caractérisé en ce que** la pièce tubulaire (75) et le prolongement (74) sont réalisés en le même fil conducteur.

15. Procédé de production d'une unité de couplage électrique (1a ; 1b ; 1c) et comprenant les étapes de :
fourniture d'un premier moyen de raidissement tubulaire (41),
fourniture d'un second moyen de raidissement tubulaire (42),
fourniture d'un manchon isolant flexible (2) ayant un trou de manchon traversant (26),
fourniture d'un morceau de métal,
usinage dudit morceau de métal pour lui donner une forme comprenant :
une première fiche de connecteur (31) comprenant des languettes (33) séparées par des fentes (34),
une seconde fiche de connecteur (32) comprenant des languettes (33) séparées par des fentes (34), et
un anneau de connecteur (35) assemblant les première (31) et seconde (32) fiches de connecteur,
pour créer un connecteur (30),
insertion du connecteur (30) à l'intérieur du trou de manchon (26),
insertion du premier moyen de raidissement (41) à l'intérieur du trou de manchon (26) d'un premier côté du connecteur (30), et
insertion du second moyen de raidissement (42) à l'intérieur du trou de manchon (26) d'un second côté du connecteur (30) qui est sensiblement opposé au premier côté du connecteur (30).
